## Europäisches Patentamt
## European Patent Office
## Office européen des brevets

(19)

(11) Veröffentlichungsnummer: **0 022 935**
**B1**

(12)

# EUROPÄISCHE PATENTSCHRIFT

(45) Veröffentlichungstag der Patentschrift:
**01.02.84**

(51) Int. Cl.³: **F 26 B 23/02**, F 26 B 21/00, F 26 B 17/00, C 12 C 1/04

(21) Anmeldenummer: **80103446.3**

(22) Anmeldetag: **20.06.80**

(54) **Verfahren und Vorrichtung zur Darrbehandlung von Grünmalz.**

(30) Priorität: **21.07.79 DE 2929707**

(43) Veröffentlichungstag der Anmeldung:
**28.01.81 Patentblatt 81/4**

(45) Bekanntmachung des Hinweises auf die Patenterteilung:
**01.02.84 Patentblatt 84/5**

(84) Benannte Vertragsstaaten:
**AT CH FR IT LI**

(56) Entgegenhaltungen:
**WO - A - 80/00183**
**DE - A - 2 536 935**
**DE - A - 2 654 758**
**DE - A - 2 720 183**
**FR - A - 2 406 174**
**US - A - 3 917 444**
**US - A - 4 092 100**

(73) Patentinhaber: **Kraftanlagen AG., Im Breitspiel 7, D-6900 Heidelberg 1 (DE)**

(72) Erfinder: **Lautner, Rainer, Ing. grad., Julius-Becker-Strasse 13, D-6901 St. Ilgen (DE)**

(74) Vertreter: **Helber, Friedrich G., Dipl.-Ing. et al, Patentanwälte Dipl.-Ing. F. G. Helber Dipl.-Ing. J.K. Zenz Giesser Weg 47, D-6144 Zwingenberg (DE)**

BUNDESDRUCKEREI BERLIN

## Verfahren und Vorrichtung zur Darrbehandlung von Grünmalz

Die Erfindung betrifft ein Verfahren zur Darrbehandlung von als Schüttgut vorliegendem Grünmalz, bei dem die Grünmalz-Schüttung mit Trocknungsluft durchströmt wird, sowie eine Vorrichtung zur Durchführung des Verfahrens.

Bei bekannten Darranlagen zur Trocknung des für die Bierherstellung bestimmten Grünmalz mit Heißluft wird das Grünmalz in einem Trocknungsraum breitflächig unter Einhaltung einer möglichst gleichbleibenden bestimmten Schichthöhe auf einer Horde ausgebreitet, um eine gleichmäßige Durchtrocknung des Darrguts durch das Durchströmen mit Trocknungsluft zu gewährleisten und die Gebläseenergie für die Zufuhr der Trocknungsluft klein zu halten (DE-A-2 654 758). Für die Beheizung der Trocknungsluft stehen direkte und indirekte Heizsysteme zur Verfügung, von denen die früher angewandte direkte Beheizung mit Öl- oder Gasbrennern trotz des feuerungstechnisch an sich guten Wirkungsgrades und der vergleichsweise geringen Anlagekosten wegen der Möglichkeit des Eintragens von gegebenenfalls schädlichen Abgasbestandteilen in das Darrgut heute nicht mehr in Frage kommen.

Die indirekte Erwärmung der Trocknungsluft erfordert dagegen einen hohen apparativen Aufwand, größere Ventilatoren und führt so zu einem höheren Eigenstromverbrauch und höherem Wartungsaufwand. Für die Durchströmung des Darrguts mit der Trocknungsluft werden bevorzugt ein- oder doppelseitig saugende Radialventilatoren mit regelbarem Antrieb vorgesehen, um die Trocknungsluftmenge wirtschaftlich an den Trocknungsverlauf im Darrgut anzupassen. Zur Energieeinsparung wurden bisher unterschiedliche Wege beschritten. Beispielsweise wurde durch entsprechende Schiebersteuerung Trockenluft wahlweise aus dem Trocknungsraum nach außen abgeleitet oder als Umluft den Zuluftventilatoren und damit dem Trocknungsprozeß wieder zugeführt, wobei der Ab- und Umluftanteil den Gesamtluftdurchsatz ergaben. Die Umluftführung erfordert Ventilatoren höherer Leistung, d. h. höheren Eigenstromverbrauchs und höhere Anlagekosten und führt zu entsprechend größerem Bauvolumen. Ein anderer Weg der Energieeinsparung richtet sich auf die Kühlung der Abluft vor dem Austritt in die Atmosphäre, indem sie beispielsweise durch rekuperative Wärmetauscher geführt wurde, um Brauchwasser zu erwärmen oder die Außenluft vorzuwärmen. Die Abluftrekuperatoren arbeiten im Bereich hoher Luftfeuchte, was sowohl Verschmutzungs- als auch Korrosionsprobleme in den Rekuperatoren zur Folge hat. Die Querschnittsverminderung ihrer Gasdurchgangspassagen durch Kondensat sowie kondensatgebundene Verschmutzungen erhöhen den Leistungsbedarf der Ventilatoren durch den ansteigenden Druckverlust. Bei Wasservorwärmung sind große Austauschflächen und hohe Pumpleistungen erforderlich. Trotz des hohen Aufwandes lassen sich nur geringe Wärmerückgewinnungsleistungen erzielen, die günstigstenfalls im Bereich von 40 bis 50% liegen.

Für die Vortrocknung von Lebkuchen vor dem eigentlichen Backvorgang ist außerdem ein als Durchlaufofen ausgebildeter Trockenofen mit indirekter Erwärmung von Außenluft als Trocknungsluft durch Übertragung von in der Ofen-Abluft enthaltener Wärme auf die dem Ofen zuzuführende Außenluft bekannt (DE-OS-2 720 183), bei dem die Wärmeübertragung von der wärmeren Abluft auf die Zuluft in der in der Klimatechnik üblichen Weise durch ein Kältemittel, z. B. Freon oder Azeton, als Übertragungsmedium erfolgt, welches im Kreislauf zwischen zwei wärmetauschenden Registern im Außenluft-Zufuhrkanal einerseits und im Abluftkanal andererseits strömt und dabei im Abluftregister unter Wärmeaufnahme verdampft und im Zuluftregister unter Abgabe von Kondensationswärme an die Zuluft kondensiert. Abgesehen von dem im Vergleich zu einem Rekuperator infolge der Verwendung eines Kältemittels als Übertragungsmedium bedingten zusätzlichen anlagetechnischen Aufwand, besteht auch hier die Gefahr des Kondensierens der in der Abluft aufgenommenen Feuchtigkeit am Abluft-Register sowie die Anlagerung kondensatgebundener Verschmutzung mit entsprechender Verminderung des Wärmeübertragungswirkungsgrades.

Auf dem Gebiet der Lackierungstechnik sind Trocknungs- oder Einbrennöfen bekannt (DE-A-2 536 935; US-A-4 092 100), mit denen lackierte Werkstücke getrocknet, bzw. ihre Lackschichten eingebrannt werden, wobei das spezielle Problem auftritt, daß beim Trocknungs- oder Einbrennvorgang die im Lack enthaltenen Lösungsmittel dampfförmig aus den Lackschichten austreten. Diese dampfförmigen Lösungsmittel können umwelt- und gesundheitsschädlich sein und außerdem auch zusammen mit dem in der Umgebungsluft enthaltenen Sauerstoff explosive Gemische bilden. Dagegen besteht die Gefahr von Kondensation der Lösungsmittel bei den in den Anlagen auftretenden hohen Temperaturen nicht, so daß also auch die Entstehung von sich an Wärmetauscherflächen niederschlagendem flüssigem Lösungsmittel und — in Verbindung mit Staub in der Abluft — anbackenden Niederschlägen bei solchen Trocknungs- oder Einbrennöfen kein Problem darstellt. Primär um die Lösungsmitteldämpfe zu unschädlichen Produkten aufzuoxidieren bzw. unter Umständen auch Explosionen der Lösungsmitteldämpfe zu vermeiden, werden Nachverbrennungsvorrichtungen für die Abluft vorgesehen, in denen die Abluft über die ohnehin hohen Lack-Einbrenntemperaturen von bis zu 1000°C hinaus weiter erhöht werden. Um die dann in der Abluft enthaltene Wärmeenergie auf hohem Temperaturniveau nutzbringend zu verwenden, werden Wärmetauscher im Abluftstrom vorgesehen, mit welchem zumindest ein Teil der Energie durch indirekte Aufheizung der Zuluft zur Trocknungskammer für den Betrieb der Öfen wiedergewonnen wird. Als Wärmetauscher werden dabei auch umlaufende regenerative Wärmetauscher mit Rotoren aus keramischen Speichermassen vorgesehen (US-A-4 092 100), welche den auftretenden extrem hohen Temperaturen standhalten.

Der Erfindung liegt demgegenüber die Aufgabe zugrunde, ein Verfahren und eine Vorrichtung zur Darrung von Grünmalz mit indirekt beheizter Außenluft als Trocknungsmedium anzugeben bzw. zu schaffen, bei dem bzw. bei welcher die Energiebilanz durch Wärmerückgewinnung aus der Abluft optimiert ist, wobei eine Verschlechterung der Energiebilanz während der Verfahrensdurchführung — z. B. durch Verschmutzung von wärmetauschenden Flächen — weitgehend vermieden wird.

Erfindungsgemäß wird diese Aufgabe gelöst durch Anwendung eines Verfahrens zur Heißlufttrocknung von zu trocknendem Gut in einem Trocknungsraum durch Zufuhr von indirekt beheizter Außenluft zum Trocknungsraum als Trocknungsluft, Durchströmung des Trocknungsraums mit der Trocknungsluft und Abfuhr der durch Aufnahme der Gutfeuchte feuchteren Luft aus dem Trocknungsraum, wobei der aus dem Trocknungsraum austretenden feuchteren Abluft zunächst durch indirekte Beheizung Wärmeenergie zugeführt und ihre relative Feuchte dadurch verringert und dann Wärmeenergie aus der relativ trockneren Abluft durch regenerativen Wärmetausch auf die dem Trocknungsraum anschließend zugeführte Außenluft übertragen wird, für die Darrbehandlung von als Schüttgut vorliegendem, für die Bierherstellung bestimmtem Grünmalz, wobei die Grünmalz-Schüttung von der regenerativ erwärmten Trocknungsluft durchströmt wird. Entgegen der Befürchtung, daß der nach dem Durchströmen des Darrguts eine sehr hohe relative Feuchte aufweisenden Abluft — selbst wenn diese relative Feuchte durch Nacherhitzung mittels eines Brenners wieder verringert wird — nicht ohne weiteres im nachgeschalteten Wärmetauscher wieder Wärmeenergie entzogen werden kann, ohne daß die Gefahr der Kondensation des in der Abluft enthaltenen Wasserdampfs und somit der Verschmutzung der wärmetauschenden Flächen mit einer zwangsläufigen Verschlechterung der Wärmebilanz besteht, und daß von den verschmutzten Rotorflächen bei der Umströmung mit Zuluft nicht hinreichend festhaftende Verschmutzungen in die Zuluft gelangen und in das Darrgut eingetragen werden, hat sich gezeigt, daß die Anwendung dieser aus der Lacktrocknung bekannten Technologie auf die Darrbehandlung von Grünmalz die gestellte Aufgabe löst.

Der aus dem Trocknungsraum abgeführten Abluft kann vor oder nach der Zufuhr von Wärmeenergie zusätzlich Außenluft zugemischt werden, deren Sauerstoffgehalt zur Oxidation schädlicher, in der Abluft enthaltener Bestandteile verwendet werden kann.

Eine optimale Trocknungsleistung bei minimalem Energieverbrauch wird dann erreicht, wenn die Zufuhr von Wärmeenergie zur Abluft in Abhängigkeit von der Temperatur der regenerativ erwärmten Zuluft gesteuert oder geregelt wird.

Die zur Durchführung des erfindungsgemäßen Verfahrens dienende Vorrichtung zur Heißlufttrocknung mit einem Trocknungsraum zur Aufnahme von zu trocknendem Gut, an dem eine Zuluftleitung für relativ trockene erhitzte Luft und eine Abluftleitung für die durch Aufnahme der Gutfeuchte feuchteren Abluft angeschlossen ist, wobei in der Abluftleitung ein Brenner zur direkten Beheizung der aus dem Trocknungsraum austretenden Abluft und dem Brenner nachgeschaltet ein zugleich in die Zuluftleitung eingeschalteter Wärmetauscher vorgesehen ist, ist erfindungsgemäß dadurch gekennzeichnet, daß zwischen der Mündung der Zuluftleitung in den und dem Austritt der Abluftleitung aus dem Trocknungsraum im Strömungsweg der Trocknungsluft im Trocknungsraum eine Horde zur Aufnahme von als Schüttgut vorliegendem, zu darrendem Grünmalz für die Bierherstellung angeordnet ist, und daß der Wärmetauscher ein umlaufender regenerativer Wärmetauscher ist.

Vorzugsweise wird ein Regenerativ-Wärmetauscher mit umlaufender Speichermasse mit ruhenden Anschlußkanälen für eine kontinuierliche Übertragung von Wärme aus der durch den Brenner direkt beheizten Abluft auf die in den Trocknungsraum einzuführende Zuluft verwendet, obwohl Regenerativ-Wärmetauscher, bei denen — in kinematischer Umkehr der Verhältnisse — die Speichermasse ruht und die Anschlußkanäle umlaufen, ebenfalls verwendbar sind.

Die Deckung des Fremdwärmebedarfs erfolgt vorzugsweise durch einen Öl- oder Gasbrenner mit einem Außenluft ansaugenden Gebläse, dessen Gebläseleistung so gewählt ist, daß es bezogen auf die für den Betrieb des Brenners erforderliche Verbrennungsluft einen Luftüberschuß liefert. Durch den im Luftüberschuß enthaltenen Sauerstoff wird die Oxidation von mit der Trocknungsluft aus dem Darrgut abgeführten schädlichen Bestandteilen gefördert.

Die Erfindung ist in der folgenden Beschreibung eines Ausführungsbeispiels in Verbindung mit der Zeichnung näher erläutert, und zwar zeigt

Fig. 1 einen Vertikalschnitt durch eine als Darranlage für Grünmalz dienende erfindungsgemäße Trocknungsvorrichtung in schematischer Darstellung,

Fig. 2 eine schematische Darstellung der Temperaturen von Zu- und Abluft über den Temperaturverlauf des Trocknungsgutes in Abhängigkeit von der Zeit für die in Fig. 1 gezeigte Darranlage, und

Fig. 3 die Luftzustände für die Darranlage gemäß Fig. 1 im I-X-Diagramm.

Bei der als Beispiel für die erfindungsgemäße Trocknungsvorrichtung ausgewählten Anlage handelt es sich um eine für die Trocknung von Grünmalz zur Gewinnung des für die Bierherstellung erforderlichen Malzes bestimmte Darranlage.

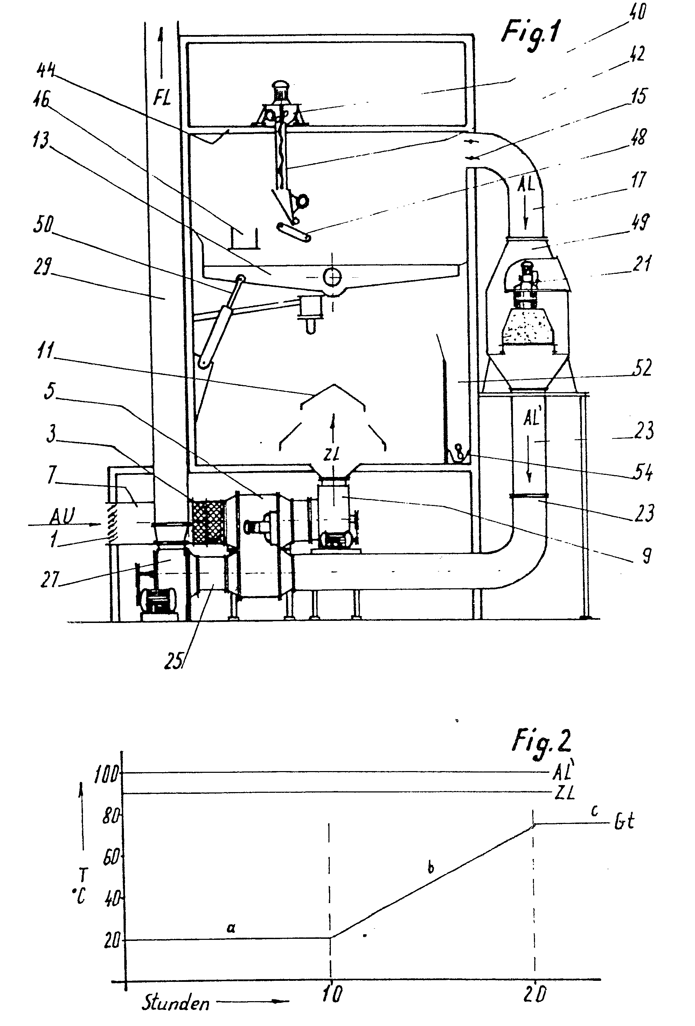

Gemäß Fig. 1 tritt die Umgebungsluft AU über eine Jalousie 1 und einen Filter 3 in den umlaufenden Regenerativ-Wärmetauscher 5 ein und durchströmt dessen wärmeabgebenden Sektor. Über eine Leitung 7 tritt anschließend die Zuluft ZL für die Darranlage in einen Zuluftventilator 9 ein, der die Zuluft über einen Verteiler 11 feinverteilt einer Horde 13 zuteilt, auf der das zu trocknende Gut, d. h. im vorliegenden Fall das Grünmalz, in möglichst gleichmäßiger Schichthöhe lagert. Die mit Feuchtigkeit beladene und abgekühlte Trocknungsluft verläßt den Darraum oberhalb der Horde durch eine Austrittsjalousie 15. Über den Abluft-Leitungsabschnitt 17 wird die Abluft AL der Darranlage einer Kammer 49 zugeleitet, in der ein Flächenbrenner 21 die Abluft abhängig von der Solltemperatur der in die Darranlage eintretenden Zuluft ZL aufheizt.

Die aufgeheizte Abluft AL' wird über den Abluft-Leitungsabschnitt 23 dem Wärme aufnehmenden Sektor des umlaufenden Regenerativ-Wärmetauschers 5 zugeführt, um Abluftwärme und zugleich die direkt in der Kammer 49 zugeführte Fremdenergie an die in die Darranlage eintretende Zuluft ZL zu übertragen.

Über einen Leitungsabschnitt 25, einen Fortluftventilator 27 und eine Austrittsleitung 29 verläßt die Fortluft FL die Darranlage.

Das zu trocknende Gut wird aus dem nicht dargestellten Bunker über eine horizontale Förderleitung 40 mit Förderschnecke einer vertikalen Förderleitung 42 zugeführt, um den Fülltrichter eines an der Decke 44 des oder auch einem Laufsteg 46 innerhalb des Trocknungsraums verfahrbaren Wurfbandes 48 zu versorgen. Auf dem Wurfband wird das Gut gleichmäßig über die innerhalb des Trocknungsraums um eine horizontale Achse schwenkbar angeordnete Darrhorde 13 verteilt. Nach durchgeführter Trocknung wird die Darrhorde durch eine Hubvorrichtung 50 im Uhrzeigersinn abgekippt, wodurch das gedarrte Malz in den seitlich angeordneten Darrmalz-Behälter 52 mit Austragschnecke abgekippt wird.

In Fig. 2 ist schematisch der Temperaturverlauf innerhalb des Darrguts Gt in Abhängigkeit von der Zeit unter den Temperaturen der Zuluft ZL und der im Brenner 21 aufgeheizten Abluft AL' eingetragen. Das zu trocknende Gut Gt weist während der Aufwärmphase a zunächst eine im wesentlichen konstante, in etwa in Höhe der Umgebungstemperatur liegende Temperatur von ca. 20° C auf, um zu Ende der Aufwärmphase verhältnismäßig kurzfristig ca. 25° C zu erreichen. In der anschließenden Trockenphase b steigt die Guttemperatur von ca. 25° C auf ca. 75° C, wobei in der Zeichnung ein linearer Temperaturanstieg dargestellt ist. In der Praxis kann dieser Kurvenverlauf je nach Art des Trocknungsgutes und der Steuerung der Temperatur der Zuluft von diesem linearen Verlauf abweichen und beispielsweise einen parabelförmigen Verlauf annehmen. Die sich anschließende Darr-, Garund Konservierungsphase C verläuft dann wiederum bei etwa konstanter Temperatur in Höhe von etwa 75° C.

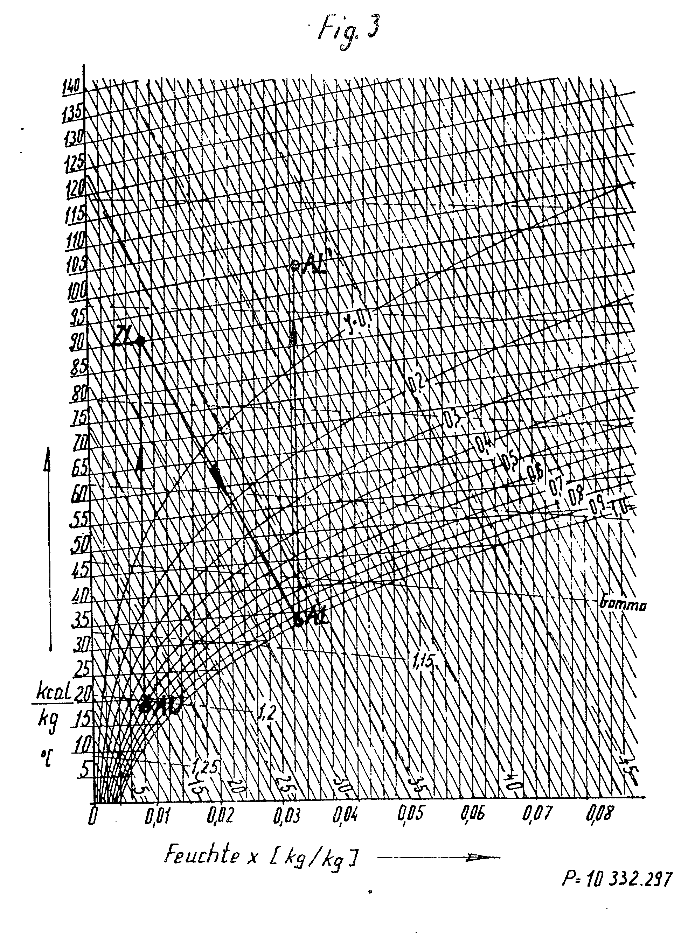

Aus Fig. 3 ist der Temperaturverlauf der Luft für den Trocknungsvorgang zu einem ausgewählten mittleren Zeitpunkt zu entnehmen.

In dem in Fig. 3 dargestellten I-X-Diagramm ist der Verlauf der Temperatur- und Feuchtigkeitswerte der Luft für den Trocknungsvorgang zu einem ausgewählten mittleren Zeitpunkt dargestellt. Es ist die Annahme getroffen, daß die gesamte Abluft der Darranlage für die Aufwärmung der Zuluft nach Zwischenaufheizung mittels Direktfeuerung eingesetzt wird. Die in die Anlage eintretende Außenluft AU habe eine Temperatur von ca. 20° C und eine relative Feuchte von 60%. Im umlaufenden Regenerativ-Wärmetauscher 5 wird diese Luft bei gleichbleibender absoluter Feuchte (0,01) auf 90° C aufgewärmt und als Zuluft mit dem Zustand ZL in die Darranlage eingespeist.

Durch die Trocknung des Darrguts während der Aufwärmphase sinkt die Temperatur von 90° C auf die Temperatur der Luftsättigung unter gleichzeitiger Erhöhung der absoluten Feuchte auf ca. 0,03 im Zustandspunkt AL. Die aus der Darranlage austretende Abluft wird einer Brennkammer zugeführt, in der bei gleichbleibender absoluter Feuchte die Ablufttemperatur auf 100° C bis zum Zustand AL' angehoben wird. Mit diesem Zustand wird die Abluft dem umlaufenden Regenerativ-Wärmetauscher zugeführt und für die Außenlufterwärmung verwendet, wodurch der Kreislauf geschlossen wird.

**Patentansprüche**

1. Verfahren zur Heißlufttrocknung von zu trocknendem Gut in einem Trocknungsraum durch Zufuhr von indirekt beheizter Außenluft zum Trocknungsraum als Trocknungsluft, Durchströmung des Trocknungsraums mit der Trocknungsluft und Abfuhr der durch Aufnahme der Gutfeuchte feuchteren Luft aus dem Trocknungsraum, wobei der aus dem Trocknungsraum austretenden feuchteren Abluft zunächst durch direkte Beheizung Wärmeenergie zugeführt und ihre relative Feuchte dadurch verringert und dann Wärmeenergie aus der relativ trockneren Abluft durch regenerativen Wärmetausch auf die dem Trocknungsraum anschließend zugeführte Außenluft übertragen wird, gekennzeichnet durch die Anwendung für die Darrbehandlung von als Schüttgut vorliegendem, für die Bierherstellung bestimmtem Grünmalz, wobei die Grünmalz-Schüttung von der Trocknungsluft durchströmt wird.

2. Verfahren nach Anspruch 1, dadurch gekennzeichnet, daß der aus dem Trocknungsraum abgeführten Abluft zusätzlich Außenluft zugemischt wird.

3. Verfahren nach Anspruch 1 oder 2, dadurch gekennzeichnet, daß die Zufuhr von Wärmeenergie zur Abluft in Abhängigkeit von der Temperatur der regenerativ erwärmten Zuluft gesteuert oder geregelt wird.

4. Vorrichtung zur Durchführung des Verfahrens nach einem der Ansprüche 1 bis 3, mit einem Trocknungsraum zur Aufnahme von zu trocknendem Gut, an dem eine Zuluftleitung (7) für relativ trockene, erhitzte Luft (ZL) und eine Abluftleitung (17, 23, 25) für die durch Aufnahme der Gutfeuchte feuchtere Abluft (AL, AL') angeschlossen ist, wobei in der Abluftleitung (17, 23, 25) ein Brenner (21) zur direkten Beheizung der aus dem Trocknungsraum austretenden Abluft (AL) und dem Brenner (21) nachgeschaltet ein zugleich in die Zuluftleitung (7) eingeschalteter Wärmetauscher vorgesehen ist, dadurch gekennzeichnet, daß zwischen der Mündung der Zuluftleitung (7) in den und dem Austritt der Abluftleitung (17, 23, 25) aus dem Trocknungsraum im Strömungsweg der Trocknungsluft im Trocknungsraum eine Horde (13) zur Aufnahme von als Schüttgut vorliegendem zu darrendem Grünmalz für die Bierherstellung angeordnet ist, und daß der Wärmetauscher ein umlaufender regenerativer Wärmetauscher (5) ist.

5. Vorrichtung nach Anspruch 4, gekennzeichnet durch einen Regenerativ-Wärmetauscher (5) mit umlaufender Speichermasse mit ruhenden Anschlußkanälen für eine kontinuierliche Übertragung von Wärme aus der durch den Brenner (21) direkt beheizten Abluft (AL') auf die in den Trocknungsraum einzuführende Zuluft (ZL).

6. Vorrichtung nach Anspruch 4 oder 5, dadurch gekennzeichnet, daß der Brenner ein Öl- oder Gasbrenner (21) mit einem Außenluft ansaugenden Gebläse ist, dessen Gebläseleistung so gewählt ist, daß es, bezogen auf die für den Betrieb des Brenners (21) erforderliche Verbrennungsluft, einen Luftüberschuß liefert.

## Claims

1. Process for hot air drying of material in a drying chamber by supplying indirectly heated outside air to the drying chamber, passing the drying air through the drying chamber and exhausting the more humid air having absorbed the humidity of the material from the drying chamber, supplying thermal energy by direct heating to the humid exhaust air discharged from the drying chamber and thereby reducing its relative humidity and transferring then thermal energy from the relative dry exhaust air by regenerative heat exchange to the outside air to be supplied to the drying chamber, characterised by the application in kiln-drying of green malt in loose material form, with the drying air passing through the loose green malt material.

2. Process according to claim 1, characterized in that outside air is mixed additionally to the exhaust air discharged from the drying chamber.

3. Process according to claim 1 or 2, characterized in that the supply of thermal energy to the exhaust air is controlled or regulated in dependence of the temperature of the supply air heated by regenerative heat exchange.

4. Device for carrying out the process according to any of claims 1 to 3, including a drying chamber for the material to be dried, to which is connected a supply air line (7) for relatively dry, heated air (ZL) and an exhaust air line (17, 23, 25) for the humid exhaust air (AL, AL'), which has absorbed the humidity contained in the material, in the exhaust air line (17, 23, 25) being installed a burner (21) for direct heating of the exhaust air (AL) leaving the drying chamber, and down-stream of the burner (21) a heat exchanger being further connected in the supply air line (7) characterized in that between the ending of the supply air line (7) into the drying chamber and the outlet of the exhaust air line (17, 23, 25) from the drying chamber a shelf-drier (13) is installed for collecting to be dried green malt for beer production in loose material form, and in that the heat exchanger is a heat exchanger of the rotary, regenerative type (5).

5. Device according to claim 4, characterized in that a regenerative heat exchanger (5) with a rotary heat storing matrix and stationary connected ducts is installed for continuous transfer of heat from the exhaust air (AL') directly heated by means of the burner (21) to the supply air (ZL) to be fed to the drying chamber.

6. Device according to claim 4 or 5, characterized in that the burner is either a oil or gas burner (21) with a fan drawing outside air, the fan capacity being chosen such that air is supplied in excess quantities in comparison with the combustion air required for operation of the burner (21).

## Revendications

1. Procédé de séchage à l'air chaud d'une matière à sécher dans une chambre de séchage par amenée d'air neuf réchauffé indirectement à la chambre de séchage comme air de séchage, passage de l'air de séchage à travers la chambre de séchage et évacuation de l'air plus humide ayant absorbé l'humidité de la matière de la chambre de séchage, l'air extrait humide sortant de la chambre de séchage étant d'abord alimenté en énergie thermique par chauffage direct diminuant ainsi son humidité relative, l'énergie thermique de l'air extrait relativement plus sec étant alors transférée par échange de chaleur à régénération à l'air neuf amené ensuite à la chambre de séchage, caractérisé en ce que le procédé est appliqué au touraillage de malt vert mis en tas et destiné à la production de la bière, le malt vert entassé étant traversé par l'air de séchage.

2. Procédé selon la revendication 1, caractérisé en ce que l'on ajoute encore de l'air neuf à l'air extrait évacué de la chambre de séchage.

3. Procédé selon la revendication 1 ou 2, caractérisé en ce que l'apport de l'énergie thermique à l'air extrait est contrôlé ou réglé en fonction de la température de l'air soufflé réchauffé par régénération.

4. Dispositif pour l'application du procédé selon l'une quelconque des revendications 1 à 3, avec une chambre de séchage destinée à recevoir la matière à sécher et à laquelle sont raccordés un conduit d'air soufflé (7) pour l'air réchauffé relativement sec (ZL) et un conduit d'air extrait (17, 23, 25) pour l'air extrait plus humide (AL, AL') ayant absorbé l'humidité de la matière, le conduit d'air extrait (17, 23, 25) étant muni d'un brûleur (21) pour le chauffage direct de l'air extrait (AL) sortant de la chambre de séchage et d'un échangeur de chaleur monté en aval du brûleur (21) et se trouvant à la fois dans le conduit d'air soufflé (7), caractérisé en ce que la chambre de séchage est munie d'un plateau de touraille (13) situé entre l'entrée du conduit d'air soufflé (7) dans la chambre de séchage et la sortie du conduit d'air extrait (17, 23, 25) de la chambre de séchage de façon à être traversé par l'air de séchage et destiné au malt vert entassé à sécher, et caractérisé en ce que l'échangeur de chaleur est un échangeur de chaleur rotatif à régénération (5).

5. Dispositif selon la revendication 4, caractérisé par un échangeur de chaleur à régénération (5) à masse régénératrice rotative et aux gaines de raccordement fixes pour le transfert continu de la chaleur de l'air extrait (AL') réchauffé directement par le brûleur (21) à l'air soufflé (ZL) à faire entrer dans la chambre de séchage.

6. Dispositif selon la revendication 4 ou 5, caractérisé en ce que le brûleur est un brûleur à huile ou à gaz (21) muni d'un ventilateur aspirant de l'air neuf, la puissance du ventilateur étant choisie de façon qu'il fournisse un excès d'air par rapport à l'air comburant nécessaire pour le fonctionnement du brûleur (21).

0 022 935

Fig.1

Fig.2

7

# Fig. 3

Feuchte x [ kg/kg ] ⟶

P= 10 332.297

9